# EUROPÄISCHE PATENTANMELDUNG

(11) **EP 2 091 135 A1**
(43) Veröffentlichungstag der Anmeldung: **19.08.2009**
(21) Anmeldenummer: 08002941.6
(22) Anmeldetag: 18.02.2008
(51) Int. Cl.: H02K 9/06

(54) **Anker für einen durchzugsbelüfteten Elektromotor**

(71) Anmelder: Metabowerke GmbH, 72622 Nürtingen (DE)
(72) Erfinder: Schmohl, Michael, Dipl-Ing., 72119 Ammerbuch (DE); Küther, Ludwig, 71111 Waldenbuch (DE); Schur, Norbert, Dipl- Ing., 72555 Metzingen (DE)
(74) Vertreter: Langöhrig, Angelika Beate

(57) **Zusammenfassung**

Die Erfindung betrifft einen Anker für einen durchzugsbelüfteten Elektromotor insbesondere für den Einsatz bei Elektrohandwerkzeuggeräten, insbesondere Bohr- oder Schleifgeräte, umfassend ein auf einer Ankerwelle (4) angeordnetes Ankerblechpaket (6) sowie einen auf der Ankerwelle angeordneten Kollektor (14), der mit in Kohlenhalter n gehaltenen Kohlebürsten zusammenwirkt und einer auf der dem Ankerblechpaket (6) abgewandten Seite des Kollektors (14) auf der Ankerwelle (4) angeordneten und mit dieser drehfest verbundenen Tachoscheibe (24), wobei die Tachoscheibe (24) auf ihrer dem Kollektor (14) zugewandten Stirnseite (26) und/oder der Umfangsseite (28) mindestens eine auf die Tachoscheibe (24) aufgesetzte Luftumlenkschaufel (30) aufweist. Ferner betrifft die Erfindung einen Elektromotor umfassend einen Anker und ein Elektrohandwerkzeuggerät, insbesondere Winkelschleifer, umfassend einen Elektromotor.

## Beschreibung

Die Erfindung betrifft einen Anker für einen durchzugsbelüfteten Elektromotor, insbesondere für den Einsatz bei Elektrohandwerkzeuggeräten, wobei der Elektromotor insbesondere ein Universalmotor sein kann. Der Anker umfasst dabei neben einem Ankerblechpaket, das auf einer Ankerwelle angeordnet ist, einen ebenfalls auf der Ankerwelle angeordneten Kollektor, der mit in Kohlenhalter gehaltenen Kohlebürsten zusammenwirkt und einer auf der dem Ankerblechpaket abgewandten Seite des Kollektors auf der Ankerwelle angeordneten und mit dieser drehfest verbundenen Tachoscheibe.

Durchzugsbelüftete Elektromotoren insbesondere von Elektrohandwerkzeuggeräten werden insbesondere in Schleif- oder Bohrwerkzeuggeräten, z.B. Winkelschleifern oder Bohrmaschinen eingesetzt, wo im Zuge der Bearbeitung partikulärer Schmutz, nämlich Schleif- oder Bohrstaub entsteht. Hierbei besteht grundsätzlich das Problem einer Beeinträchtigung der Ankerwicklung, insbesondere eines Wickelkopfes oder der Wickelköpfe der Ankerwicklung, da Partikel und Staub im Kühlluftstrom mitgerissen werden und abrasiv auf die Ankerwicklung einwirken. Darüber hinaus besteht ebenfalls aufgrund des bei der Belüftung mitgerissenen Staubes und Schmutzes im Bereich der Kohlenhalterungen und der Kohlebürsten, die mit dem Kollektor zusammenwirken, eine Beeinträchtigungsgefahr, so dass diese z.T. im Stand der Technik von der Luftströmung, die von einem Lüfter erzeugt wird, abgeschottet werden. Auf diese Weise können Staubablagerungen auf den Kohlenhalterungen sowie daraus resultierende Kurzschlüsse in diesem Bereich vermieden werden. Allerdings ist es dabei nachteilig, dass die Kohlenhalter auf diese Weise von der Kühlluft abgekoppelt sind und es so aufgrund hoher Temperaturen zu Ausfällen im Bereich Kohlenhalter , Kohlebürsten und Kollektorsystem kommen kann, sofern die Temperaturabfuhr über das Gehäuse eines Elektrohandwerkzeuggeräts zu gering ist.

Gattungsgemäße Anker sind im Stand der Technik bekannt und beispielsweise in der WO 2007/118483 A1 beschrieben, wobei sich diese Druckschrift mit der Verhinderung von Ablagerungen von Staubpartikeln auf den Wickelköpfen beschäftigt und hierzu axial über das Blechpaket überstehende Stäbe vorsieht. Ebenfalls mit dem Schutz der Wickelköpfe vor auftreffenden Staubpartikel beschäftigt sich die DE 298 21 112 Ul, die einen sich konisch oder kalottenförmig verjüngenden Käfig aus zwei zur Längsachse konzentrisch verlaufenden ringförmigen Elementen und diese Elemente verbindende geneigte Streben beschreibt, die auf dem Wickelkopf oder auf dem Blechpaket oder auf dem Kollektor drehfest aufbringbar sind und ebenfalls bei rotierendem Antrieb einen Schutz gegen eine Partikelbeaufschlagung des Wickelkopfs bilden sollen.

Zur Verhinderung der Staublagerungen und des Auftreffens von Partikeln im Bereich Kollektor, Kohlebürsten und Kohlebürstenhalterungen ist es darüber hinaus bekannt, den Bereich der Kohlebürstenhaltungen von dem Kühlluftstrom, der im Bereich des Kollektors durch den Sog, der durch den Lüfter mit seinen Lüfterschaufeln erzielt wird, angesaugt wird, zu trennen, um die Kohlenhalterungen bzw. Kohlebürstenhalterungen staubdicht und damit geschützt gegen Kurzschlüsse zu lagern.

Ausgehend von diesem Stand der Technik soll es nun Aufgabe der Erfindung sein, eine Temperaturabfuhr im Bereich der Kohlebürstenhalterungen bereitzustellen, ohne dass dieser Bereich einer wesentlichen Staubbelastung ausgesetzt ist.

Die Erfindung löst diese Aufgabe durch einen Anker mit den Merkmalen des Anspruchs 1, bei dem auf der Tachoscheibe auf ihrer dem Kollektor zugewandten Stirnseite und/oder der Umfangsseite der Tachoscheibe mindestens eine auf die Tachoscheibe aufgesetzte Luftumlenkschaufel vorgesehen ist.

Durch die mindestens eine auf der Tacho- oder Schleuderscheibe aufgebrachte Luftumlenkschaufel, die auf der Kollektorseite also der Stirnseite der Tachoscheibe und/oder der Umfangsseite der Tachoscheibe angeordnet ist, wird erreicht, dass die am Anker vorbeiströmende Luft, die durch die Lüfterschaufeln des Lüfters angesaugt wird, durch die mindestens eine Luftumlenkschaufel auf dem Kollektor in Richtung Kohlenhalter abgelenkt wird und an diesem vorbeistreicht und diesen dabei kühlt.

Dabei werden durch die vergleichsweise kleinen Luftumlenkschaufeln, die auf der Tachoscheibe angeordnet werden, keine Staubpartikel in Richtung Kohlenhalter geschleudert, da hierfür der erzeugte Sog der mindestens einen Luftumlenkschaufel nicht ausreichend ist. Gleichzeitig ist die Luftmenge jedoch ausreichend, um eine Kühlung der Kohlenhalter bereitzustellen. Dabei kann die mindestens eine Luftumlenkschaufel bereits aufgrund des geringeren Durchmessers der Tachoscheibe gegenüber dem Lüfter nur eine geringe Luftumlenkung hervorrufen. Auf diese Weise kann verhindert werden, dass es durch Kontakt im Bereich Kollektor, Kohlebürsten und Kohlenhalter mit Staubpartikeln zu Kurzschlüssen in diesem Bereich kommt. Auf der anderen Seite können jedoch die Kohlenhalter durch die vorbeiströmende Luft, die durch die mindestens eine Luftumlenkschaufel in Richtung der Kohlenhalter umgelenkt wird, so hinreichend gekühlt werden, dass Ausfälle in diesem Bereich aufgrund einer Temperaturüberhitzung verhindert werden können, unabhängig von der Temperaturabfuhr über das Gerätegehäuse.

Dabei ist es besonders bevorzugt, wenn die mindestens eine Luftumlenkschaufel kalottenförmig bzw. halbkalottenförmig ausgebildet ist, wobei die Kalotten insbesondere einen Durchmesser von 0,5 bis 5 mm und insbesondere 1 bis 3 mm, besonders bevorzugt 1,3 - 2,1 mm aufweisen können. Alternativ kann vorgesehen sein, dass die mindestens eine Luftumlenkschaufel insbesondere wie Lüfterschaufeln, das heißt als insbesondere radial verlaufende Rippen, ausgebildet und insbesondere sowohl im Bereich der Umfangsfläche als auch im Bereich der dem Kollektor zugewandten Stirnseite der Tachoscheibe vorgesehen sind. Im Bereich der Umfangsseite können dann die Rippen axial verlaufen. Ferner können auch lediglich an der Umfangsseite oder der Stirnseite angeordnete Rippen vorgesehen sein. Sofern die Luftumlenkschaufeln als Rippen ausgebildet sind, können sie eine Rippenbreite von 0,5 bis 5 mm und insbesondere von 1 bis 3 mm und insbesondere von 1,3 - 2,1 mm aufweisen. Die Erstreckung der Rippen innerhalb der beiden Seiten, nämlich der Stirnseite (in radiale Richtung) sowie der Umfangsfläche (in axiale Richtung), ist abhängig vom Durchmesser der Tachoscheibe sowie von der Dicke derselben und auch von der gewünschten abzulenkenden Kühlluftmenge.

Dabei kann insbesondere vorgesehen sein, dass mehrere Luftumlenkschaufeln vorgesehen sind, die über den Umfang der Tachoscheibe äquidistant verteilt sind. Hierbei können insbesondere 2 bis 14 Luftumlenkschaufeln über den Umfang der Tachoscheibe verteilt angeordnet sein, vorzugsweise 4 bis 12 und besonders bevorzugt 8 bis 12 Luftumlenkschaufeln.

Dabei kann auch vorgesehen sein, dass die an der Stirnseite oder der Umfangsfläche verlaufenden als Rippen ausgebildeten Luftumlenkschaufeln nicht radial, bzw. axial verlaufend angeordnet sind, sondern unter einem Winkel zur radialen bzw. axialen Richtung auf der jeweiligen Fläche angeordnet sind. Auf diese Weise kann die Luftmitnahme weiter optimiert und verbessert werden.

Zusätzlich kann vorteilhaft vorgesehen sein, dass es sich bei dem Ankerblechpaket um ein mit Längsnuten versehenes Blechpaket handelt, wobei aus den Längsnuten stirnseitig Drahtwindungen einer Wicklung austreten, die dort einen Wickelkopf bilden. Es kann hier weiterhin vorgesehen sein, dass zum Schutz der Drahtwicklungen sowie der Wickelköpfe gegen abrasive Beaufschlagung mit Staub Schutzeinrichtungen wie in der WO 2007/118483 beschrieben, vorgesehen sind in Form von Stäben, die in einige oder alle Längsnuten des Ankerblechpakets eingesetzt sind und auf einer oder beiden Seiten des Ankerblechpakets axial in Längsrichtung über dieses überstehen, so dass die überstehenden Stabenden den Wickelkopf an der jeweiligen Stirnseite umgeben und schützen.

Dabei können die Stäbe, die bei rotierendem Antrieb des Ankers mit diesem mitbewegt werden, aufgrund der hohen Drehzahl ein sehr wirksames Schutzschild in Form einer rotierenden Abschirmung bilden, die bewirkt, dass nur wenig oder kein Partikelstaub auf den Wickelkopf auftreffen und die Wicklung beschädigen kann. Dennoch kann der Elektromotor und dessen Anker durch einen hinreichenden Kühlluftstrom wirksam gekühlt werden.

Besonders einfach kann die Gestaltung der mindestens einen Luftumlenkschaufel realisiert werden, wenn die Tachoscheibe als Kunststoffteil ausgebildet ist, wobei die mindestens eine Luftumlenkschaufel insbesondere einstückig an die Tachoscheibe angeformt sein kann.

Weiterhin kann vorteilhaft vorgesehen werden, dass die Kohlenhalter durch eine Abdichtung und/oder eine Kapselung vom Haupt-Kühlluftstrom, der durch den Lüfter erzeugt wird, nicht unmittelbar überstrichen werden. Eine Kühlung erfolgt nur über den Teil-Luftstrom, der durch die Luftumlenkschaufeln umgelenkt wird sowie über die Wärmeabfuhr über das Gehäuse.

Auf die vorstehend beschriebene Weise kann eine bisher bestehende Abschirmung der Kohlenhalter, die mit dem Kollektor zusammenwirken, gegenüber Staubpartikeln, die durch den Kühlluftstrom mitgezogen werden, bestehen bleiben, wobei dennoch die Kohlenhalter einer hinreichenden Kühlung zugeführt werden können. Es wird daher sowohl gegenüber von der Kühlluft abgeschotteten Systemen als auch gegenüber herkömmlich gekühlten Systemen ein Vorteil erreicht.

Des Weiteren betrifft die Erfindung auch einen Elektromotor mit einem erfindungsgemäßen Anker, wobei der Elektromotor darüber hinaus einen Stator oder Ständer umfasst, der den Anker koaxial umschließt und darüber hinaus betrifft die Erfindung eine Elektrohandwerkzeuggerät, insbesondere einen Winkelschleifer, aber auch Meißel, Bohrer, Bohrhammer und Schlagbohrer umfassend einen erfindungsgemäßen Anker, wobei dieses insbesondere ein Gehäuse umfassen kann, dass im Bereich des Kollektors Lufteintrittsöffnungen aufweist. Die Lufteintrittsöffnungen können auch an einem dem Werkzeug abgewandten Ende des Gehäuses angeordnet sein.

Weitere Merkmale, Einzelheiten und Vorteile der Erfindung ergeben sich aus den beigefügten Patentansprüchen und der zeichnerischen Darstellung und nachfolgenden Beschreibung eines besonders bevorzugten Ausführungsbeispiels des erfindungsgemäßen Ankers.

In der Zeichnung zeigt:
- Figur 1: einen erfindungsgemäßen Anker;
- Figur 2: eine Tachoscheibe und
- Figur 3: eine Tachoscheibe gemäß Figur 2 im Schnitt.

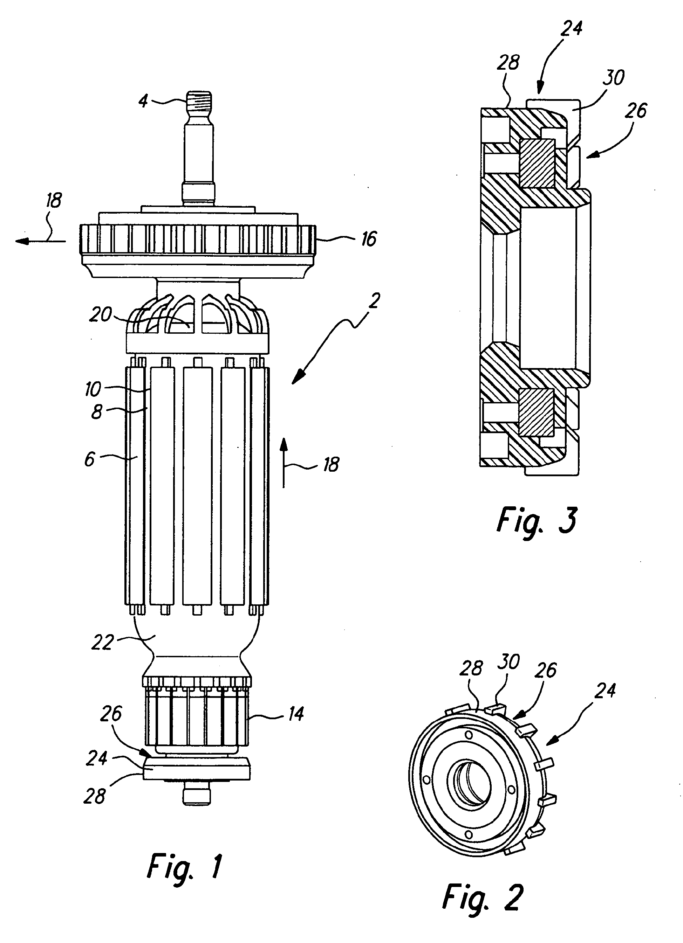

Figur 1 zeigt einen insgesamt mit dem Bezugszeichen 2 bezeichneten Anker für einen belüfteten Elektromotor, insbesondere für ein Elektrowerkzeuggerät, beispielsweise ein Schleif- oder Bohrwerkzeug, z.B. einen Winkelschleifer.

Der Anker 2 umfasst dabei eine Ankerwelle 4, auf der ein Ankerblechpaket 6 mit einer Mehrzahl von Längsnuten 8 und einer Ankerwicklung 10 vorgesehen ist. Das Ankerblechpaket 6 mit der Ankerwicklung 10 kann auf die Ankerwelle 4 aufgepresst oder formschlüssig dort festgelegt sein. In jedem Fall ist das Ankerblechpaket 6 jedoch drehfest auf der Ankerwelle 4 befestigt und dreht sich gemeinsam mit der Ankerwelle im Antriebsfall. Darüber hinaus umfasst der Anker 2 einen Kollektor 14 und einen Lüfter (Lüfterrad) 16. Mittels des Lüfterrads 16 wird ein Kühlluftstrom in Richtung der Pfeile 18 an Kollektor 14 und Ankerblechpaket 6 vorbei in Richtung auf das Lüfterrad 16 erzeugt. Die Längsnuten 8 nehmen dabei eine in der Zeichnung nicht näher dargestellte Vielzahl von Drahtwindungen der Ankerwicklung 10 auf. Die Drahtwindungen bilden zum Lüfterrad 16 hin einen ersten Wickelkopf 20 und zum Kollektor 14 hin einen zweiten Wickelkopf 22.

Der Kollektor 14 wirkt dabei mit Kohlebürsten (nicht dargestellt) zusammen, die an Kohlenhalterungen festgelegt sind. Die Kohlenhalterungen sind gegenüber dem Kühlluftstrom 18 abgeschottet, um den Aufprall von Partikeln auf die Kohlenhalterungen zu verhindern.

Darüber hinaus umfasst der Anker 2 eine Tachoscheibe 24, die ebenfalls auf der Ankerwelle 4 angeordnet und drehfest mit dieser verbunden ist. Die Tachoscheibe 24 ist dabei als Kunststoffscheibe ausgebildet und weist eine kollektorseitige Stirnfläche 26 sowie eine Umfangsfläche 28 auf. Die Tachoscheibe 24 ist in den Figuren 2 und 3 näher erläutert.

Figur 2 zeigt nun die Tachoscheibe 24 mit ihrer umfangsseitigen Fläche 28 sowie der Stirnfläche 26. Die Tachoscheibe 24 weist dabei auf ihrer dem Kollektor 14 zugewandten Stirnfläche 26 sowie auf die umfangsseitige Fläche 28 übergreifend als Rippen ausgebildete Luftumlenkschaufeln 30 auf, wobei im vorliegenden Fall zwölf Luftumlenkschaufeln 30 über den Umfang der Tachoscheibe 24 äquidistant verteilt sind. Die Luftumlenkschaufeln 30 sind dabei wie Lüfterschaufeln als Rippen ausgebildet und dienen dazu, einen Teil der durch den Lüfter 16 angesaugten Luft 18 so umzulenken, dass die Luft auf die nicht dargestellten Kohlenhalterungen, die mit dem Kollektor 14 über Kohlebürsten (nicht dargestellt) zusammenwirken, umgelenkt wird.

Die Luftumlenkschaufeln 30 können dabei eine Breite von ca. 1 bis 2 mm aufweisen und sind insbesondere so dimensioniert, dass sie einen ausreichenden Kühlluftstrom auf die Kohlenbürstenhalterungen umlenken, der jedoch auf der anderen Seite so gering ist, dass keine Staubpartikel mitgerissen werden, die dann mit den Kohlenbürstenhalterungen in Kontakt kommen und dort zu Staubablagerungen auf den Kohlebürstenhaltern sowie gegebenenfalls in diesem Bereich zu Kurzschlüssen aufgrund der Staubablagerungen führen. Dabei dienen die Luftumlenkschaufeln 30 lediglich zum Umlenken eines geringen Teilstroms der angesaugten Luft 18. Dies erfolgt bereits durch die kleineren Abmessungen der Tachoscheibe 24 gegenüber dem Lüfterrad 16, der keine größeren Luftumlenkschaufeln 30 zulässt.

Figur 3 zeigt nun einen Schnitt durch eine Tachoscheibe 24 gemäß Figur 2, wobei hier die Luftumlenkschaufeln 30 in Form von Lüfterschaufeln zu erkennen sind, die sich ausgehend von der Stirnfläche 26 bis in die Umfangsfläche 28 der Tachoscheibe 24 hinein erstrecken.

Auf diese Weise können die Kohlenhalter, wie beispielsweise bei Winkelschleifern der neuen Bauarten, von der Luftströmung, die durch das Lüfterrad 16 verursacht wird, abgeschirmt werden, um so Staubablagerungen und daraus resultierende Kurzschlüsse zu vermeiden. Gleichzeitig kann jedoch aufgrund der vorgesehenen Luftumlenkschaufeln 30 eine Luftumlenkung eines Teilluftstroms, der durch den Lüfter 16 angesaugt wird, auf die nicht dargestellten Kohlenhalterungen erreicht werden. Die ansonsten im Bereich der Kohlenhalterungen zu geringe Temperaturabfuhr kann so verhindert werden, so dass auf diese Weise keine zu hohen Temperaturen in diesem Bereich auftreten, die zu Ausfällen im Bereich Kohlenhalter, Kohlebürsten (Kohlen) und Kollektorsystem führen können.

Die erfindungsgemäße Vorsehung von Luftumlenkschaufeln 30 auf der Tachoscheibe 24 ermöglicht so von vor Staub geschützte Kohlenhalter, die konstruktiv in einer geschlossenen, staubgeschützten Kammer untergebracht werden können, und gleichzeitig eine Realisierung der notwendigen Kühlung des Kohlenhaltersystems.

## Patentansprüche

1. Anker für einen durchzugsbelüfteten Elektromotor insbesondere für den Einsatz bei Elektrohandwerkzeuggeräten, insbesondere Bohr- oder Schleifgeräte, umfassend ein auf einer Ankerwelle (4) angeordnetes Ankerblechpaket (6) sowie einen auf der Ankerwelle angeordneten Kollektor (14), der mit in Kohlenhaltern gehaltenen Kohlebürsten zusammenwirkt und einer auf der dem Ankerblechpaket (6) abgewandten Seite des Kollektors (14) auf der Ankerwelle (4) angeordneten und mit dieser drehfest verbundenen Tachoscheibe (24), **dadurch gekennzeichnet, dass** die Tachoscheibe (24) auf ihrer dem Kollektor (14) zugewandten Stirnseite (26) und/oder der Umfangsseite (28) mindestens eine auf die Tachoscheibe (24) aufgesetzte Luftumlenkschaufel (30) aufweist.

2. Anker nach Anspruch 1, **dadurch gekennzeichnet, dass** die mindestens eine Luftumlenkschaufel (30) kalottenförmig oder halbkalottenförmig ausgebildet ist.

3. Anker nach Anspruch 1, **dadurch gekennzeichnet, dass** die mindestens eine Luftumlenkschaufel (30) als rippenförmige Lüfterschaufeln ausgebildet ist.

4. Anker nach Anspruch 1 oder 2, **dadurch gekennzeichnet, dass** mehrere Luftumlenkschaufeln (30) vorgesehen sind, die über den Umfang der Tachoscheibe (24) äquidistant verteilt sind.

5. Anker nach einem der Ansprüche 1 bis 3, **dadurch gekennzeichnet, dass** auf der dem Kollektor (14) gegenüberliegenden Seite des Ankerblechpakets (6) ein Lüfterrad (16) mit Lüfterschaufeln auf der Ankerwelle (4) angeordnet ist.

6. Anker nach einem der vorangehenden Ansprüche, **dadurch gekennzeichnet, dass** die Kohlenhalter von einem Kühlungsstrom, der durch das Lüfterrad (16) erzeugt wird, abgeschottet angeordnet sind.

7. Elektromotor umfassend einen Anker nach einem der vorangehenden Ansprüche, wobei der Elektromotor insbesondere ein Universalmotor ist.

8. Elektrohandwerkzeuggerät, insbesondere Winkelschleifer, umfassend einen Elektromotor gemäß Anspruch 7.

9. Elektrohandwerkzeuggerät nach Anspruch 8, **dadurch gekennzeichnet, dass** im Bereich des Kollektors Lüftungsschlitze in einem Gehäuse des Elektrohandwerkzeuggeräts vorgesehen sind.
